(19) Europäisches Patentamt
European Patent Office
Office européen des brevets

(11) **EP 2 250 538 B1**

(12) **EUROPÄISCHE PATENTSCHRIFT**

(45) Veröffentlichungstag und Bekanntmachung des Hinweises auf die Patenterteilung:
**04.03.2020 Patentblatt 2020/10**

(21) Anmeldenummer: **08716520.5**

(22) Anmeldetag: **11.03.2008**

(51) Int Cl.:
**G05B 23/02** *(2006.01)*

(86) Internationale Anmeldenummer:
**PCT/EP2008/002023**

(87) Internationale Veröffentlichungsnummer:
**WO 2009/112055 (17.09.2009 Gazette 2009/38)**

(54) **VERFAHREN ZUR VISUELLEN ANZEIGE DER QUALITÄT VON AUF EINER ENERGIEÜBERTRAGUNGSANLAGE ÜBERTRAGENER ENERGIE**

METHOD FOR THE VISUAL DISPLAY OF THE QUALITY OF POWER TRANSMITTED ON A POWER TRANSMISSION SYSTEM

PROCÉDÉ D'AFFICHAGE VISUEL DE LA QUALITÉ DE L'ÉNERGIE TRANSMISE SUR UNE INSTALLATION DE TRANSMISSION D'ÉNERGIE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(43) Veröffentlichungstag der Anmeldung:
**17.11.2010 Patentblatt 2010/46**

(73) Patentinhaber: **Siemens Aktiengesellschaft 80333 München (DE)**

(72) Erfinder:
• **ANKLAM, Uwe**
  **91126 Kammerstein (DE)**
• **HÖFLER, Werner**
  **90542 Eckental (DE)**
• **KRAFT, Markus**
  **91486 Ühlfeld (DE)**
• **MITTER, Bernd**
  **91096 Möhrendorf (DE)**
• **PRALLE, Jan**
  **75203 Königsbach (DE)**

(56) Entgegenhaltungen:
**US-A1- 2005 038 825     US-A1- 2007 083 398**

• **Siemens: "Simeas Q Quality Recorder", , 1999, Retrieved from the Internet: URL:http://www.novec.ru/catalog/novosibirsk/catalog/siemens/simeas_q.pdf [retrieved on 2018-07-06]**

**Beschreibung**

Die Erfindung bezieht sich auf ein Verfahren zur visuellen Anzeige der Qualität von auf einer Energieübertragungsanlage übertragener Energie. Unter Energieübertragungsanlagen im Sine dieser Patentanmeldung sind jedwede Anlagen zu verstehen, die Energie übertragen können, also zum Beispiel elektrische Energieübertragungsanlagen, die Energie in elektrischer Form übertragen, oder mediengebundene Energieübertragungsanlagen wie zum Beispiel Gasleitungssysteme, wie Erdgasleitungssysteme, oder Ölleitungssysteme, die die Energie mediengebunden, sei es gas- oder ölgebunden, übertragen.

Aus der US 2005/0038825 A1 ist ein computergestützt arbeitendes Rohrleitungsmanagementsystem mit einer fensterbasierten graphischen Benuteroberfläche bekannt.

Der Erfindung liegt diesbezüglich die Aufgabe zugrunde, ein Verfahren anzugeben, das es einem Benutzer erlaubt, ein besonders hohes Maß an Informationen mit besonders geringem Bedienaufwand zu erhalten.

Diese Aufgabe wird erfindungsgemäß durch ein Verfahren mit den Merkmalen gemäß Patentanspruch 1 gelöst. Vorteilhafte Ausgestaltungen der Erfindung sind in Unteransprüchen angegeben.

Danach ist erfindungsgemäß vorgesehen, dass zumindest drei Anzeigebereiche angezeigt werden, nämlich ein zeitbezogener, ein ortsbezogener und ein regelbezogener Anzeigebereich, wobei der zeitbezogene Anzeigebereich eine benutzerseitige Auswahl des Zeitintervalls ermöglicht, der auf eine Regelverletzung einer oder mehrerer vorgegebener Energiequalitätsregeln untersucht werden soll, wobei der ortsbezogene Anzeigebereich einen oder mehrere vorgegebene Anlagenabschnitte anzeigt, die auf eine Regelverletzung untersucht werden, und wobei der regelbezogene Anzeigebereich eine oder mehrere vorgegebene Energiequalitätsregeln anzeigt, für die die Regelverletzungsuntersuchung erfolgt, und wobei bei dem Verfahren in dem zeitbezogenen Anzeigebereich eine benutzerseitige Auswahl eines Zeitintervalls erfasst wird, und wobei bei dem Verfahren nach der benutzerseitigen Auswahl des Zeitintervalls ermittelt wird, bei welchen Anlagenabschnitten und für welche Energiequalitätsregeln in dem ausgewählten Zeitintervall eine Regelverletzung aufgetreten ist und in dem ortsbezogenen und dem regelbezogenen Anzeigebereich die jeweils von einer Regelverletzung betroffenen Anlagenabschnitte und Energiequalitätsregeln optisch markiert werden.

Ein wesentlicher Vorteil des erfindungsgemäßen Verfahrens besteht darin, dass die Informationen abschnitts- und regelbezogen korreliert angezeigt werden, so dass beispielsweise allein durch ein Verändern des Zeitbezugs Informationen über Anlagenabschnitte und Qualitätsregeln erhalten werden können, ohne dass nach diesen abschnitts- und regelbezogenen Informationen noch zusätzlich speziell gefragt werden muss. Es ist daher beispielsweise möglich, dass Fortschreiten einer Regelverletzung von einem Anlagenabschnitt in den nächsten oder die Korrelation von Regelverstößen zwischen den Energiequalitätsregeln zu visualisieren, indem allein Zeitintervalle ausgewählt werden bzw. Veränderungen an der Zeitachse vorgenommen werden.

Gemäß einer bevorzugten Ausgestaltung des Verfahrens ist vorgesehen, dass nach der Anzeige, bei welchen Anlagenabschnitten und für welche Energiequalitätsregeln in dem ausgewählten Zeitintervall eine Regelverletzung aufgetreten ist, eine benutzerseitige Selektion ermöglicht wird, mit der einzelne oder mehrere der von einer Regelverletzung betroffenen Energiequalitätsregeln selektiert werden können, wobei nach einer benutzerseitigen Selektion ermittelt wird, welche Anlagenabschnitte von einer Regelverletzung bezüglich der selektierten Energiequalitätsregeln betroffen sind. Bei dieser Ausgestaltung des Verfahrens kann der Benutzer durch Auswahl der Energiequalitätsregeln bzw. durch Auswahl der Anzahl der Energiequalitätsregeln selbst festlegen, wie sehr die Einzelinformationen der einzelnen Anlagenabschnitte vor der Anzeige verdichtet sein sollen.

Gemäß einer anderen vorteilhaften Ausgestaltung des Verfahrens kann vorgesehen sein, dass nach der Anzeige, bei welchen Anlagenabschnitten und für welche Energiequalitätsregeln in dem ausgewählten Zeitintervall eine Regelverletzung aufgetreten ist, eine benutzerseitige Selektion ermöglicht wird, mit der eine oder mehrere der von einer Regelverletzung betroffenen Anlagenabschnitte selektiert werden können, wobei nach einer benutzerseitigen Selektion ermittelt wird, welche Energiequalitätsregeln von einer Regelverletzung bezüglich der selektierten Anlagenabschnitte betroffen sind. Bei dieser Ausgestaltung des Verfahrens kann der Benutzer durch Auswahl der Anlagenabschnitte bzw. durch Auswahl der Anzahl der Anlagenabschnitte selbst festlegen, wie sehr die Einzelinformationen vor der Anzeige verdichtet sein sollen.

Auch kann vorgesehen sein, dass nach der Anzeige, bei welchen Anlagenabschnitten und für welche Energiequalitätsregeln in dem ausgewählten Zeitintervall eine Regelverletzung aufgetreten ist, eine benutzerseitige Selektion ermöglicht wird, mit der eine oder mehrere der von einer Regelverletzung betroffenen Anlagenabschnitte und eine oder mehrere der von einer Regelverletzung betroffenen Energiequalitätsregeln selektiert werden können, wobei nach einer benutzerseitigen Selektion ermittelt wird, welche selektierten Energiequalitätsregeln von einer Regelverletzung bezüglich der selektierten Anlagenabschnitte betroffen sind.

Im Übrigen wird es als vorteilhaft angesehen, wenn in dem zeitbezogenen Anzeigebereich für das jeweils benutzerseitig ausgewählte Zeitintervall der zeitliche Verlauf eines Energiequalitätswerts angezeigt wird, der ein Maß für die Energiequalität zum jeweiligen Zeitpunkt innerhalb des Zeitintervalls darstellt. Die Anzeige eines zeitlichen Verlaufs eines Energiequalitätswerts ermöglicht eine besonders schnelle visuelle Auswertung der Zusammenhänge durch eine Bedienperson.

Für die Bestimmung des Energiequalitätswerts werden bevorzugt alle vorgegebenen Anlagenabschnitte und alle vorgegebenen Energiequalitätsregeln berücksichtigt. Alternativ können für die Bestimmung des Energiequalitätswerts ausschließlich diejenigen Anlagenabschnitte und Energiequalitätsregeln berücksichtigt werden, die innerhalb des benutzerseitig ausgewählten Zeitintervalls von einer Regelverletzung betroffen sind. Besonders bevorzugt werden für die Bestimmung des Energiequalitätswerts alle Anlagenabschnitte und alle ausgewählten Energiequalitätsregeln berücksichtigt, wenn innerhalb des Zeitintervalls keine Regelverletzung festgestellt wird.

Darüber hinaus wird es als vorteilhaft angesehen, wenn im Falle einer benutzerseitigen Selektion einzelner oder mehrerer Energiequalitätsregeln für die Bestimmung und die Anzeige des Energiequalitätswerts im zeitbezogenen Anzeigebereich ausschließlich die selektierten Energiequalitätsregeln und diejenigen Anlagenabschnitte berücksichtigt werden, die innerhalb des Zeitintervalls und bezüglich der selektierten Energiequalitätsregeln von einer Regelverletzung betroffen sind.

Demgemäß wird es ebenfalls als vorteilhaft angesehen, wenn im Falle einer benutzerseitigen Selektion einzelner oder mehrerer Anlagenabschnitte für die Bestimmung und die Anzeige des Energiequalitätswerts im zeitbezogenen Anzeigebereich ausschließlich die selektierten Anlagenabschnitte und diejenigen Energiequalitätsregeln berücksichtigt werden, die innerhalb des Zeitintervalls und innerhalb der selektierten Anlagenabschnitte von einer Regelverletzung betroffen sind.

Die optische Markierung von Anlagenabschnitte und/oder Energiequalitätsregeln erfolgt vorzugsweise in ampelartiger Form durch rote oder grüne Ampelsymbole.

Die Erfindung bezieht sich außerdem auf eine Anzeigeeinrichtung mit einem Bildschirm zur visuellen Anzeige der Qualität von auf einer Energieübertragungsanlage übertragener Energie, einer mit dem Bildschirm verbundenen Steuereinrichtung, und einer mit der Steuereinrichtung verbundenen Eingabeeinrichtung, die eine benutzerseitige Eingabe eines Zeitintervalls und eine benutzerseitige Selektion einer oder mehrerer Energiequalitätsregeln und/oder eine benutzerseitige Selektion einer oder mehrerer Anlagenabschnitte ermöglicht. Erfindungsgemäß ist die Steuereinrichtung geeignet, eines der oben beschriebenen Verfahren durchzuführen. Die Steuereinrichtung kann beispielsweise durch eine Datenverarbeitungsanlage gebildet sein.

Vorzugsweise ist mit der Steuereinrichtung ein Speicher verbunden ist, in dem für jede vorgegebene Energiequalitätsregel und für jeden Anlagenabschnitt jeweils der zeitliche Verlauf des regel- und abschnittsindividuellen Energiequalitätswerts abgespeichert ist.

Als Erfindung wird auch ein Computerprogrammprodukt angesehen, das nach einer Installation auf einer Datenverarbeitungsanlage die Datenverarbeitungsanlage derart programmiert, dass sie eines der oben beschriebenen Verfahren durchführen kann.

Die Erfindung wird nachfolgend anhand von Ausführungsbeispielen näher erläutert; dabei zeigen beispielhaft

Figur 1          ein erstes Ausführungsbeispiel für eine erfindungsgemäße Anzeigeeinrichtung, anhand derer auch das erfindungsgemäße Verfahren beispielhaft erläutert wird;

Figuren 2 bis 6   verschiedene Anzeigen auf einem Bildschirm der Anzeigeeinrichtung gemäß Figur 1 während des Betriebes und

Figur 7          ein weiteres Ausführungsbeispiel für eine Anzeige auf einer anderen erfindungsgemäßen Anzeigeeinrichtung.

In den Figuren werden der Übersicht halber für identische oder vergleichbare Komponenten stets dieselben Bezugszeichen verwendet.

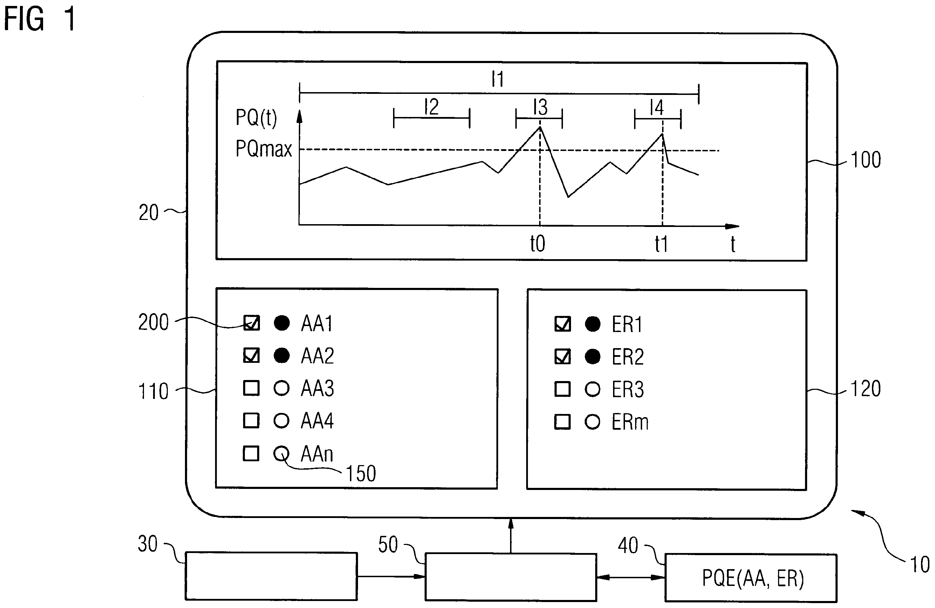

In der Figur 1 erkennt man eine Anzeigeeinrichtung 10, die einen Bildschirm 20, eine Eingabeeinrichtung 30, einen Speicher 40 sowie eine Steuereinrichtung 50 aufweist. Die Eingabeeinrichtung 30 sowie der Speicher 40 sind mit der Steuereinrichtung 50 verbunden, die den Bildschirm 20 ansteuert.

Die Steuereinrichtung 50 steuert den Bildschirm 20 derart an, dass dieser zur visuellen Anzeige der Qualität von auf einer nicht weiter dargestellten Energieübertragungsanlage übertragener Energie zumindest drei Anzeigebereiche 100, 110 und 120 anzeigt.

Bei dem Anzeigebereich 100 handelt es sich um einen zeitbezogenen Anzeigebereich, der eine benutzerseitige Auswahl eines Zeitintervalls ermöglicht, das auf eine Regelverletzung einer oder mehrerer vorgegebener Energiequalitätsregeln bezüglich eines oder mehrerer ortsbezogener Anlagenabschnitte der Energieübertragungsanlage hin untersucht werden soll. Man erkennt in dem zeitbezogenen Anzeigebereich 100 die Darstellung eines Energiequalitätswertes PQ, der über der Zeitachse, also über der Zeit t, aufgetragen ist. Es lässt sich erkennen, dass bei dem in der Figur 1 beispielhaft dargestellten Zustand der Energiequalitätswert PQ einen vorgegebenen Maximalwert PQmax ungefähr zu den Zeitpunkten t0 und t1 überschreitet.

In dem ortsbezogenen Anzeigebereiche 110 sind eine oder mehrere vorgegebene Anlagenabschnitte AA1, AA2, AA3, AA4 und AAn der Energieübertragungsanlage angezeigt, für die eine Regelverletzungsuntersuchung bezüglich der vorgegebenen Energiequalitätsregeln erfolgen soll.

Bei dem Anzeigebereich 120 handelt es sich um einen regelbezogenen Anzeigebereich, der die vorgegebenen Energiequalitätsregeln ER1, ER2, ER3 und ERm anzeigt, für die die Regelverletzungsuntersuchung erfolgen soll.

Die Anzeigeeinrichtung 10 lässt sich nun aufgrund einer entsprechenden Programmierung der Steuereinrichtung 50, die nachfolgend näher beschrieben wird, benutzerseitig wie folgt einsetzen:

Bei einer ersten Bedienvariante hat der Benutzer die Möglichkeit, das in dem zeitbezogenen Anzeigebereich 100 dargestellte Zeitfenster zu variieren und sich beispielsweise anstelle des Zeitintervalls I1 andere Zeitintervalle I2, I3 oder I4 anzeigen zu lassen. Eine solche Einstellung des gewünschten Zeitintervalls kann beispielsweise über eine Tastatur oder über eine PC-Maus erfolgen, die Bestandteile der Eingabeeinrichtung 30 bilden können.

Die Steuereinrichtung 50 ist nun derart ausgestaltet, dass sie nach einer benutzerseitigen Selektion des Zeitintervalls - beispielsweise des Zeitintervalls I1 - ermittelt, in welchen Anlagenabschnitten und bezüglich welcher Energiequalitätsregeln eine Regelverletzung aufgetreten ist. Gibt der Benutzer beispielsweise das Zeitintervall I1 an, so wird auf dem Bildschirm 20 in dem zeitbezogenen Anzeigebereich 100 anhand des zeitlichen Verlaufs des Energiequalitätswertes PQ erkennbar, dass zu den Zeiten t0 und t1 zwei Regelverstöße aufgetreten sind.

Die Regelverstöße sind auch in dem ortsbezogenen Anzeigebereich 110 und dem regelbezogenen Anzeigebereich 120 dargestellt: So lässt sich erkennen, dass die Steuereinrichtung 50 in dem ortsbezogenen Anzeigebereich 110 die von Regelverstößen betroffenen Anlagenabschnitte optisch markiert, beispielsweise durch binärlogische Anzeigeelemente 150, zum Beispiel durch eine 0 oder eine 1, durch schwarze oder weiße Kreise (wie in der Figur 1 dargestellt) oder durch farbige Symbole, wie beispielsweise Ampelsymbole. In der Figur 1 erkennt man, dass die beiden Anlagenabschnitte AA1 und AA2 durch schwarze Kreise markiert sind, da sie von einer Regelverletzung betroffen sind.

In entsprechender Weise wird die Steuereinrichtung 50 den Bildschirm 20 derart ansteuern, dass auch die von der Regelverletzung betroffenen Energiequalitätsregeln entsprechend markiert werden. Bei dem Ausführungsbeispiel gemäß der Figur 1 wird davon ausgegangen, dass die beiden Regelverletzungen zu den Zeitpunkten t0 und t1 auf die beiden Energiequalitätsregeln ER1 und ER2 zurückgehen, die entsprechend mit schwarzen Kreisen markiert sind.

Bei der Darstellung gemäß der Figur 1 kann der Benutzer nun noch nicht erkennen, welcher der beiden Anlagenabschnitte AA1 oder AA2 für die Regelverletzung zum Zeitpunkt t0 und welche der beiden Anlagenabschnitte AA1 oder AA2 für die Regelverletzung zum Zeitpunkt t1 verantwortlich ist. Außerdem kann er nicht erkennen, welche der beiden Energiequalitätsregeln ER1 oder ER2 zum Zeitpunkt t0 und welche zum Zeitpunkt t1 verletzt worden ist.

Um eine nähere Fehleranalyse durchführen zu können, hat der Benutzer der Anzeigeeinrichtung 10 nun die Möglichkeit, mit Hilfe von Auswahlelementen 200, die in der Figur 1 beispielhaft durch Haken dargestellt sind, einzelne oder mehrere Anlagenabschnitte sowie einzelne oder mehrere Energiequalitätsregeln zu selektieren, um diese für den zeitbezogenen Anzeigebereich 100 sowie für die weitere Analyse auszuwählen.

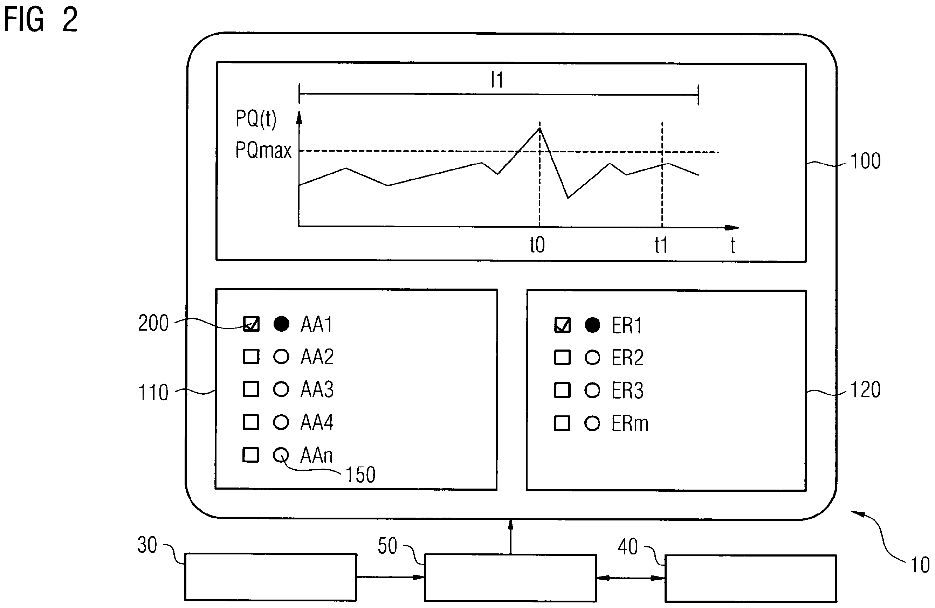

In der Figur 2 wird beispielhaft davon ausgegangen, dass der Benutzer nachfolgend mit dem Auswahlelement 200 in dem ortsbezogenen Anzeigebereich 110 den Anlagenabschnitt AA1 selektiert hat, indem er beispielsweise bei der Anzeige gemäß der Figur 1 das Auswahlelemente 200 für den Anlagenabschnitt AA2 entfernt, z. B. weggeklickt, hat. Demgemäß wird die Steuereinrichtung 50 nun den Energiequalitätswert PQ ausschließlich für den Anlagenabschnitt AA1 ermitteln und in dem zeitbezogenen Anzeigebereich 100 anzeigen.

Es lässt sich in der Figur 2 erkennen, dass der Energiequalitätswert PQ ausschließlich zum Zeitpunkt t0 den vorgegebenen Grenzwert PQmax überschreitet nicht hingegen zum Zeitpunkt t1. Der Benutzer erhält somit die Information, dass die Regelverletzung zum Zeitpunkt t0 auf den Anlagenabschnitt AA1 zurückzuführen ist und demgemäß der in der Figur 1 dargestellte Fehler zum Zeitpunkt t1 im Umkehrschluss auf den Anlagenabschnitt AA2 zurückzuführen sein muss. Außerdem wird von der Steuereinrichtung 50 in dem regelbezogenen Anzeigebereich 120 angezeigt, dass die Qualitätsregel ER1 und nicht die Qualitätsregel ER2 verletzt worden ist.

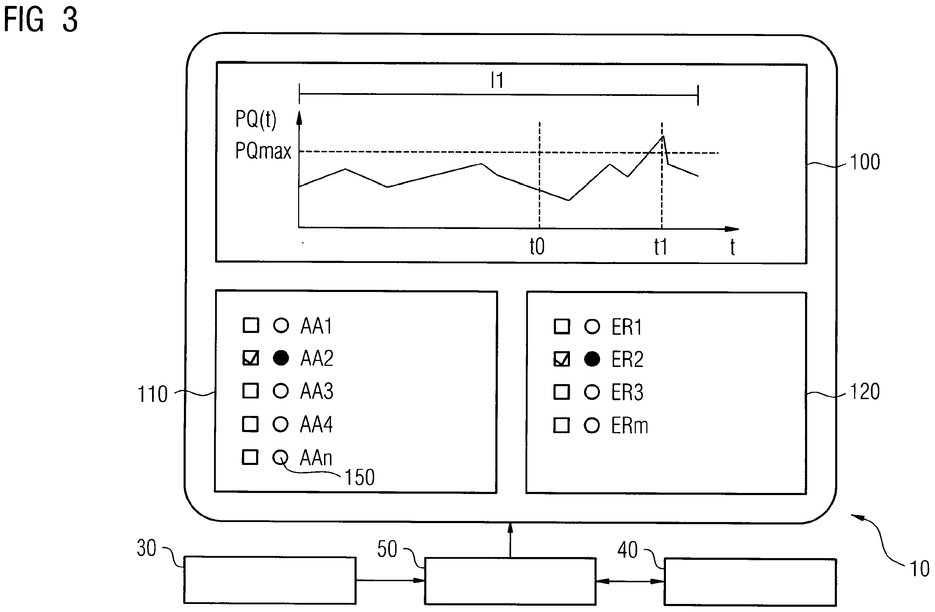

Um die letztgenannte Aussage zu verifizieren, kann der Benutzer anstelle des Anlagenabschnitts AA1 auch den Anlagenabschnitt AA2 selektieren, wodurch sich der in der Figur 3 dargestellte Verlauf des Energiequalitätswerts PQ im zeitbezogenen Anzeigebereich 100 ergibt. Aufgrund der Selektion des Anlagenabschnitts AA2 wird auch die Anzeige in dem regelbezogenen Anzeigebereich 120 verändert: Bei der benutzerseitigen Selektion des Anlagenabschnitts AA2 gemäß Figur 3 wird von der Steuereinrichtung 50 ausschließlich die Energiequalitätsregel ER2 markiert, da diese zum Zeitpunkt t1 im Anlagenabschnitt AA2 verletzt worden war. Die Energiequalitätsregel ER1 wird hingegen nicht markiert.

Zusammengefasst wird also im Falle einer benutzerseitigen Selektion einzelner oder mehrerer Anlagenabschnitte in dem ortsbezogenen Anzeigebereich 110 stets automatisch durch die Steuereinrichtung 50 dafür gesorgt, dass es zu einer entsprechenden anlagenbezogenen Anzeige des Energiequalitätswerts PQ im zeitbezogenen Anzeigebereich 100 sowie zu einer entsprechenden anlagenbezogenen Anzeige der von einer Verletzung betroffenen Energiequalitätsregeln im regelbezogenen Anzeigebereich 120 kommt.

Anstelle einer ortsbezogenen Selektion kann der Benutzer der Anzeigeeinrichtung 10 auch eine regelbezogene Selektion durchführen, indem er beispielsweise ausgehend von dem Zustand in der Figur 1 eine der verletzten Energiequalitätsregeln ER1 oder ER2 selektiert, um die Information zu erlangen, zu welchem Zeitpunkt die jeweilige Energiequalitätsregel verletzt worden ist und welcher Anlagenabschnitt dafür verantwortlich ist. Eine solche Selektion erfolgt wieder durch ein Anbringen (z. B. Anklicken) oder Entfernen (z. B. Wegklicken) der entsprechenden Auswahlelemente 200.

Wird beispielsweise davon ausgegangen, dass der Benutzer die Energiequalitätsregel ER1 mit dem Auswahlelement 200 selektiert, so wird von der Steuereinrichtung 50 der zeitbezogene Anzeigebereich mit dem Verlauf des Energiequalitätswerts PQ sowie auch der ortsbezogene Anzeigebereich 110 entsprechend aktualisiert werden. Das sich ergebende Bild auf dem Bildschirm 20 würde dem Bild gemäß der Figur 2 entsprechen. Man erkennt, dass im Falle einer Selektion der Energiequalitätsregel ER1 der Anlagenabschnitt AA1 optisch markiert wird und sich im zeitbezogenen Anzeigebereich 100 der Verlauf des Energiequalitätswertes PQ allein auf die Energiequalitätsregel ER1 bezieht. Auch hier wird erkennbar, dass die Energiequalitätsregel ER1 im Anlagenabschnitt AA1 zum Zeitpunkt t0 verletzt worden ist.

Selektiert der Benutzer der Anzeigeeinrichtung 10 unter Zuhilfenahme der Eingabeeinrichtung 30 mit dem Auswahlelement 200 hingegen die Energiequalitätsregel ER2, so ergibt sich wieder das Bild gemäß der Figur 3, denn die Steuereinrichtung 50 wird ermitteln, dass die Energiequalitätsregel ER2 im Anlagenabschnitt AA2 zum Zeitpunkt t1 verletzt worden ist und entsprechend den Anlagenabschnitt AA2 markieren und eine Aktualisierung im zeitbezogenen Anzeigebereich 100 durchführen. Um dabei auch zu signalisieren, dass sich der in dem zeitbezogenen Anzeigebereich 100 dargestellte Energiequalitätswert PQ auf den Anlagenabschnitt AA2 bezieht, wird dieser automatisch mit einem weiteren Auswahlelement 200 gekennzeichnet, das seitens der Steuereinrichtung 50 automatisch ermittelt und zur Anzeige gebracht wird, sobald benutzerseitig die Energiequalitätsregel ER2 ausgewählt worden ist.

Der Benutzer hat außerdem die Möglichkeit, die in dem zeitbezogenen Anzeigebereich 100 dargestellten Zeitintervalle zu verändern, um beispielsweise statt des Zeitintervalls I1 gemäß Figur 1 andere Zeitintervalle, wie beispielsweise die Zeitintervalle I2, I3 oder I4, anzeigen zu lassen. Im Falle einer Veränderung der angezeigten Zeitintervalle im zeitbezogenen Anzeigebereich 100 werden auch der ortsbezogenen Anzeigebereich 110 sowie der regelbezogene Anzeigebereich 120 aktualisiert.

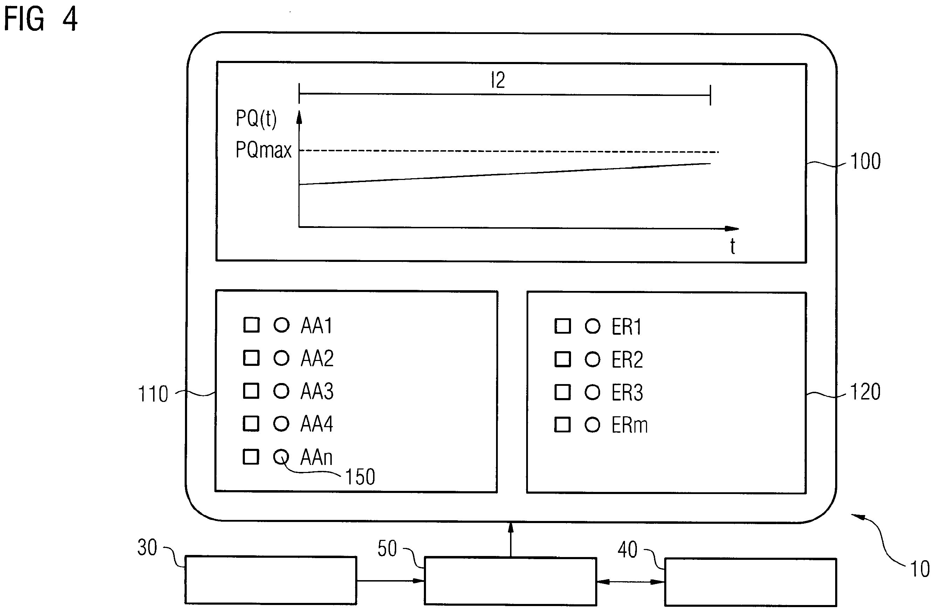

Selektiert der Benutzer beispielsweise das Zeitintervall I2 gemäß Figur 4, so wird in dem ortsbezogenen Anzeigebereich 110 sowie in dem regelbezogenen Anzeigebereich 120 weder ein Anlagenabschnitt noch eine Energiequalitätsregel markiert werden, da in keinem der Anlagenabschnitte eine Energiequalitätsregel verletzt ist (vgl. Figur 4).

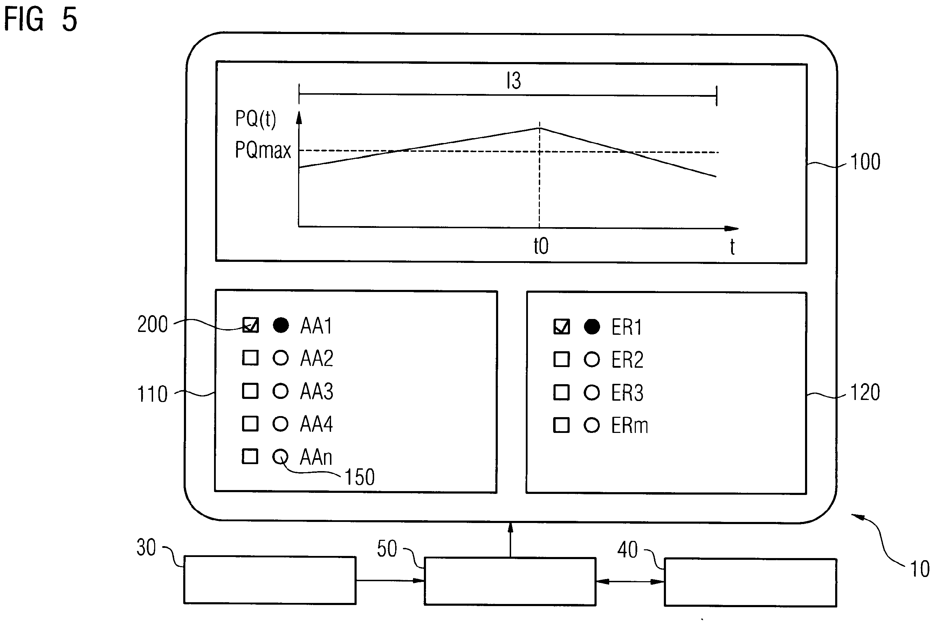

Selektiert der Benutzer hingegen das Zeitintervall I3 (vgl. Figur 5), das sich auf den Zeitpunkt t0 bezieht, so wird der Anlagenabschnitt AA1 und die Energiequalitätsregel ER1 durch die Steuereinrichtung 50 optisch markiert werden, da nämlich in diesem Zeitintervall die Energiequalitätsregel ER1 im Anlagenabschnitt AA1 verletzt worden ist.

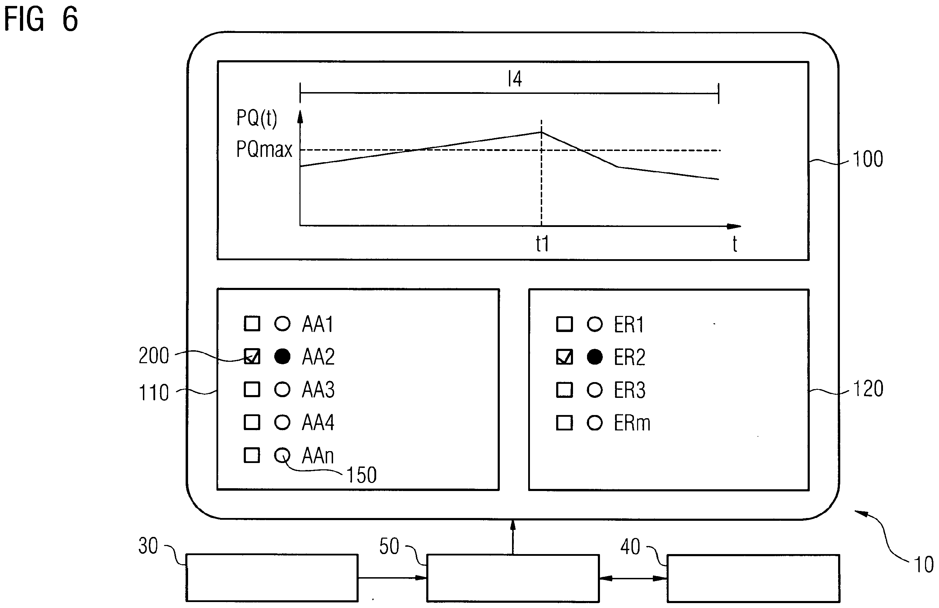

In entsprechender Weise wird in dem ortsbezogenen Anzeigebereich 110 sowie in dem regelbezogenen Anzeigebereich 120 der Anlagenabschnitt AA2 und die Energiequalitätsregel ER2 durch die Steuereinrichtung 50 optisch markiert, wenn der Benutzer das Zeitintervall I4 selektiert (vgl. Figur 6).

Die Berechnung des Energiequalitätswertes PQ erfolgt somit in Abhängigkeit davon, welche Anlagenabschnitte und welche Energiequalitätsregeln berücksichtigt werden sollen. Um die Berechnung des Energiequalitätswertes zu ermöglichen, kann in dem Speicher 40 beispielsweise für jede vorgegebene Energiequalitätsregel ER1, ER2, ER3 und ERm sowie für jeden Anlagenabschnitt AA1, AA2, AA3, AA4 und AAn jeweils der zeitliche Verlauf des regel- und abschnittsindividuellen Energiequalitätswerts PQE(AA, ER) abgespeichert sein.

Für die Berechnung des in dem zeitbezogenen Anzeigebereich 100 angezeigten Energiequalitätswerts PQ wird die Steuereinrichtung 50 beispielsweise zunächst ermitteln, welche Energiequalitätsregeln und welche Anlagenabschnitte zu berücksichtigen sind und von den zu berücksichtigenden Anlagenabschnitten und den zu berücksichtigenden Energiequalitätsregeln jeweils die regel- und abschnittsindividuellen Energiequalitätswerte PQE(AA, ER) zu jedem anzuzeigenden Zeitpunkt ermitteln und jeweils den größten regel- und abschnittsindividuellen Energiequalitätswert PQE(AA, ER) als resultierenden Energiequalitätswert PQ anzeigen. Es gilt also:

$$PQ(t) = Max[PQE(AA,ER)](t)$$

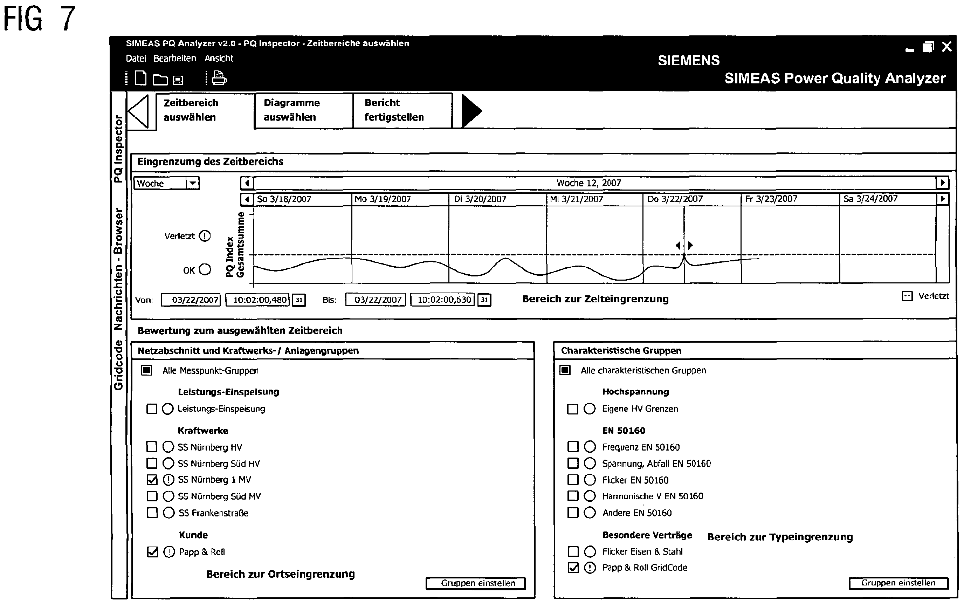

In der Figur 7 ist ein weiteres Ausführungsbeispiel für eine Anzeige auf dem Bildschirm 20 gemäß der Figur 1 gezeigt.

**Patentansprüche**

1. Verfahren zur visuellen Anzeige der Qualität von auf einer Energieübertragungsanlage übertragener Energie mit einer Anzeigeeinrichtung mit einem Bildschirm (20) zur visuellen Anzeige der Qualität von auf einer Energieübertragungsanlage übertragener Energie, einer mit dem Bildschirm verbundenen Steuereinrichtung (50) und einer mit der Steuereinrichtung verbundenen Eingabeeinrichtung (30), **dadurch gekennzeichnet, dass**

     - zumindest drei Anzeigebereiche (100, 110, 120) angezeigt werden, nämlich ein zeitbezogener, ein ortsbezogener und ein regelbezogener Anzeigebereich,

- wobei der zeitbezogene Anzeigebereich (100) eine benutzerseitige Auswahl eines Zeitintervalls (I1, I2, I3, I4) ermöglicht, der auf eine Regelverletzung einer oder mehrerer vorgegebener Energiequalitätsregeln (ER1, ER2, ER3, ERm) untersucht werden soll,

- wobei der ortsbezogene Anzeigebereich (110) einen oder mehrere vorgegebene Anlagenabschnitte (AA1, AA2, AA3, AA4, AAn) anzeigt, die auf eine Regelverletzung untersucht werden, und

- wobei der regelbezogene Anzeigebereich (120) die vorgegebenen Energiequalitätsregeln anzeigt, für die die Regelverletzungsuntersuchung erfolgt, und wobei bei dem Verfahren mit einer Steuereinrichtung der Anzeigeeinrichtung folgende Schritte durchgeführt werden:

- Erfassen einer benutzerseitigen Auswahl eines Zeitintervalls (I1, I2, I3, I4) in dem zeitbezogenen Anzeigebereich (100),

- Ermitteln, bei welchen Anlagenabschnitten und für welche Energiequalitätsregeln in dem ausgewählten Zeitintervall eine Regelverletzung aufgetreten ist; und

- optisches Markieren der jeweils von einer Regelverletzung betroffenen Anlagenabschnitte und Energiequalitätsregeln in dem ortsbezogenen und dem regelbezogenen Anzeigebereich.

2.  Verfahren nach Anspruch 1,
    **dadurch gekennzeichnet, dass**

    - nach der Anzeige, bei welchen Anlagenabschnitten und für welche Energiequalitätsregeln in dem ausgewählten Zeitintervall eine Regelverletzung aufgetreten ist, eine benutzerseitige Selektion ermöglicht wird, mit der einzelne oder mehrere der von einer Regelverletzung betroffenen Energiequalitätsregeln selektiert werden können,

    - wobei nach einer benutzerseitigen Selektion ermittelt wird, welche Anlagenabschnitte von einer Regelverletzung bezüglich der selektierten Energiequalitätsregeln betroffen sind.

3.  Verfahren nach Anspruch 1 oder 2,
    **dadurch gekennzeichnet, dass**

    - nach der Anzeige, bei welchen Anlagenabschnitten und für welche Energiequalitätsregeln in dem ausgewählten Zeitintervall eine Regelverletzung aufgetreten ist, eine benutzerseitige Selektion ermöglicht wird, mit der eine oder mehrere der von einer Regelverletzung betroffenen Anlagenabschnitte selektiert werden können,

    - wobei nach einer benutzerseitigen Selektion ermittelt wird, welche Energiequalitätsregeln von einer Regelverletzung bezüglich der selektierten Anlagenabschnitte betroffen sind.

4.  Verfahren nach einem der vorangehenden Ansprüche,
    **dadurch gekennzeichnet, dass**

    - nach der Anzeige, bei welchen Anlagenabschnitten und für welche Energiequalitätsregeln in dem ausgewählten Zeitintervall eine Regelverletzung aufgetreten ist, eine benutzerseitige Selektion ermöglicht wird, mit der eine oder mehrere der von einer Regelverletzung betroffenen Anlagenabschnitte und eine oder mehrere der von einer Regelverletzung betroffenen Energiequalitätsregeln selektiert werden können,

    - wobei nach einer benutzerseitigen Selektion ermittelt wird, welche selektierten Energiequalitätsregeln von einer Regelverletzung bezüglich der selektierten Anlagenabschnitte betroffen sind.

5.  Verfahren nach einem der vorangehenden Ansprüche,
    **dadurch gekennzeichnet, dass**
    in dem zeitbezogenen Anzeigebereich für das jeweils benutzerseitig ausgewählte Zeitintervall der zeitliche Verlauf eines Energiequalitätswerts angezeigt wird, der ein Maß für die Energiequalität zum jeweiligen Zeitpunkt innerhalb des Zeitintervalls darstellt.

6.  Verfahren nach Anspruch 5,
    **dadurch gekennzeichnet, dass**
    für die Bestimmung des Energiequalitätswerts alle vorgegebenen Anlagenabschnitte und alle vorgegebenen Energiequalitätsregeln berücksichtigt werden.

7.  Verfahren nach Anspruch 6,
    **dadurch gekennzeichnet, dass**
    für die Bestimmung des Energiequalitätswerts ausschließlich diejenigen Anlagenabschnitte und Energiequalitätsregeln berücksichtigt werden, die innerhalb des benutzerseitig ausgewählten Zeitintervalls von einer Regelverletzung betroffen sind.

8.  Verfahren nach Anspruch 7,
    **dadurch gekennzeichnet, dass**
    für die Bestimmung des Energiequalitätswerts alle Anlagenabschnitte und alle ausgewählten Energiequalitätsregeln berücksichtigt werden, wenn innerhalb des Zeitintervalls keine Regelverletzung festgestellt wird.

**9.** Verfahren nach einem der Ansprüche 5-8,
**dadurch gekennzeichnet, dass**
im Falle einer benutzerseitigen Selektion einzelner oder mehrerer Energiequalitätsregeln für die Bestimmung und die Anzeige des Energiequalitätswerts im zeitbezogenen Anzeigebereich ausschließlich die selektierten Energiequalitätsregeln und diejenigen Anlagenabschnitte berücksichtigt werden, die innerhalb des Zeitintervalls und bezüglich der selektierten Energiequalitätsregeln von einer Regelverletzung betroffen sind.

**10.** Verfahren nach einem der Ansprüche 5-9,
**dadurch gekennzeichnet, dass**
im Falle einer benutzerseitigen Selektion einzelner oder mehrerer Anlagenabschnitte für die Bestimmung und die Anzeige des Energiequalitätswerts im zeitbezogenen Anzeigebereich ausschließlich die selektierten Anlagenabschnitte und diejenigen Energiequalitätsregeln berücksichtigt werden, die innerhalb des Zeitintervalls und innerhalb der selektierten Anlagenabschnitte von einer Regelverletzung betroffen sind.

**11.** Verfahren nach einem der vorangehenden Ansprüche,
**dadurch gekennzeichnet, dass**
die optische Markierung in ampelartiger Form durch rote oder grüne Ampelsymbole erfolgt.

## Claims

**1.** Method for the visual display of the quality of power transmitted in a power transmission installation with a display device having a screen (20) for visual display of the quality of power transmitted in a power transmission installation, having a control device (50) which is connected to the screen, and having an input device (30) which is connected to the control device,
**characterized in that**

- at least three display areas (100, 110, 120) are displayed, specifically a time-related display area, a position-related display area and a rule-related display area,
- wherein a time-related display area (100) allows user selection of the time interval (I1, 12, 13, 14) which is intended to be investigated for rule infringement of one or more predetermined power quality rules (ER1, ER2, ER3, ERm)
- wherein the position-related display area (110) displays one or more predetermined installation sections (AA1, AA2, AA3, AA4, AAn) which are investigated for a rule infringement, and
- wherein the rule-related display area (120) displays the predetermined power quality rules for which the rule infringement investigation is being carried out, and wherein the following steps are carried out in the method by means of a control device of the display device:
- detecting a user selection of a time interval (I1, 12, 13, 14) in the time-related display area (100),
- determining the installation sections in which and the power quality rules for which a rule infringement has occurred in the selected time interval; and
- visually marking the respective installation sections and power quality rules affected by a rule infringement in the position-related display area and the rule-related display area.

**2.** Method according to Claim 1,
**characterized in that**

- after displaying the installation sections in which a rule infringement has occurred in the selected time interval, and which power quality rules have been infringed, a user selection is made possible by means of which one or more of the power quality rules affected by a rule infringement can be selected,
- wherein, after a user selection, the installation sections affected by a rule infringement with respect to the selected power quality rules are determined.

**3.** Method according to Claim 1 or 2,
**characterized in that**

- after displaying the installation sections in which a rule infringement has occurred in the selected time interval, and which power quality rules have been infringed, a user selection is made possible by means of which one or more of the installation sections affected by a rule infringement can be selected,
- wherein, after a user selection, the power quality rules which have been affected by a rule infringement with respect to the selected installation sections are determined.

**4.** Method according to one of the preceding claims,
**characterized in that**

- after displaying the installation sections in which a rule infringement has occurred in the selected time interval, and which power quality rules have been infringed, a user selection is made possible by means of which one or more of the installation sections affected by a rule infringement and one or more of the power quality rules affected by a rule infringement can be selected,
- wherein, after a user selection, the selected power quality rules which have been affected by a rule infringement with respect to the selected installation sections are determined.

**5.** Method according to one of the preceding claims, **characterized in that**
the time profile of a power quality value which represents a measure of the power quality at the respective time within the time interval is displayed in the time-related display area for the respective user-selected time interval.

**6.** Method according to Claim 5, **characterized in that**
all predetermined installation sections and all predetermined power quality rules are taken into account for determining the power quality value.

**7.** Method according to Claim 6, **characterized in that**
only those installation sections and power quality rules which are affected by a rule infringement within the user-selected time interval are taken into account for determining the power quality value.

**8.** Method according to Claim 7, **characterized in that**
all the installation sections and all the selected power quality rules are taken into account for determining the power quality value when no rule infringement is found within the time interval.

**9.** Method according to one of Claims 5-8, **characterized in that**,
when a user selection is made of one or more power quality rules for determining and displaying the power quality value in the time-related display area, only those selected power quality rules and those installation sections are taken into account which have been affected by a rule infringement within the time interval and with respect to the selected power quality rules.

**10.** Method according to one of Claims 5-9, **characterized in that**
in the event of a user selection of one or more installation sections for determining and displaying the power quality value in the time-related display area, only the selected installation sections and those power quality rules are taken into account which have been affected by a rule infringement within the time interval and within the selected installation sections.

**11.** Method according to one of the preceding claims, **characterized in that**
the optical marking is carried out in traffic-light form, by red or green traffic-light symbols.

**Revendications**

**1.** Procédé d'affichage visuel de la qualité de l'énergie transportée sur une installation de transport d'énergie par un dispositif d'affichage ayant un écran (20) d'affichage visuel de la qualité de l'énergie transportée sur une installation de transport d'énergie, un dispositif (50) de commande relié à l'écran et un dispositif (30) d'entrée relié au dispositif de commande, **caractérisé en ce que**

- on affiche au moins trois domaines (100, 110, 120) d'affichage, à savoir un domaine d'affichage rapporté à un temps, un domaine d'affichage rapporté à un lieu et un domaine d'affichage rapporté à une règle,
- dans lequel le domaine (100) d'affichage rapporté à un temps rend possible un choix de la part de l'utilisateur d'un intervalle (I1, I2, I3, I4) de temps, qui doit être examiné en ce qui concerne une contravention à une ou à plusieurs règles (ER1, ER2, ER3, ERm) de qualité d'énergie donnée à l'avance,
- dans lequel le domaine (110) d'affichage rapporté à un lieu affiche une ou plusieurs parties (AA1, AA2, AA3, AA4, AAn) de l'installation données à l'avance, qui sont examinées du point de vue d'une contravention à une règle, et
- dans lequel le domaine (120) d'affichage rapporté à une règle affiche les règles de qualité d'énergie données à l'avance, pour lesquelles l'examen de la contravention à une règle s'effectue et dans lequel, dans le procédé, on effectue, par le dispositif de commande du dispositif d'affichage, les stades suivants :
- détection d'un choix de la part de l'utilisateur d'un intervalle (I1, I2, I3, I4) de temps dans le domaine (100) d'affichage rapporté à un temps,
- détermination des parties de l'installation et des règles de qualité d'énergie pour lesquelles une contravention aux règles s'est produite dans l'intervalle de temps choisi ; et
- repérage visuel des parties de l'installation concernées et des règles de qualité d'énergie concernées par une contravention à une règle, dans le domaine d'affichage rapporté à un lieu et le domaine d'affichage rapporté à une règle.

**2.** Procédé suivant la revendication 1, **caractérisé en ce que**

- après l'affichage indiquant les parties de l'installation et les règles de la qualité d'énergie pour lesquelles une contravention à une règle s'est produite dans l'intervalle de temps choisi, il est rendu possible une sélection de la part de l'utilisateur, par laquelle une ou plusieurs règles de qualité d'énergie concernées par une contravention à une règle peuvent être choisies,
- dans lequel, après une sélection de la part de l'utilisateur, il est déterminé les parties de l'installation qui sont concernées par une contravention à une règle en ce qui concerne les règles de qualité d'énergie choisies.

**3.** Procédé suivant la revendication 1 ou 2, **caractérisé en ce que**

- après l'affichage pour des parties de l'installation et des règles de la qualité d'énergie pour lesquelles une contravention à une règle s'est produite dans l'intervalle de temps choisi, une sélection de la part de l'utilisateur est rendue possible, par laquelle une ou plusieurs des parties de l'installation concernées par une contravention d'une règle peuvent être choisies,
- dans lequel, après une sélection de la part de l'utilisateur, il est déterminé les règles de la qualité d'énergie qui sont concernées par une contravention à une règle en ce qui concerne les parties d'installation choisies.

**4.** Procédé suivant l'une des revendications précédentes, **caractérisé en ce que**

- après l'affichage indiquant les parties de l'installation et les règles de la qualité d'énergie pour lesquelles une contravention à une règle s'est produite dans l'intervalle de temps choisi, une sélection de la part de l'utilisateur est rendue possible, par laquelle une ou plusieurs parties de l'installation concernées par une contravention à une règle et une ou plusieurs règles de la qualité d'énergie concernées par une contravention à une règle peuvent être sélectionnées,
- dans lequel, après une sélection de la part de l'utilisateur, il est déterminé les règles de la qualité d'énergie choisies qui sont concernées par une contravention à une règle en ce qui concerne les parties de l'installation choisies.

**5.** Procédé suivant l'une des revendications précédentes, **caractérisé en ce que**, dans le domaine de l'affichage rapporté à un temps, on affiche, pour l'intervalle de temps choisi de la part de l'utilisateur, la courbe dans le temps d'une valeur de la qualité de l'énergie, qui représente une mesure de la qualité de l'énergie à l'instant dans l'intervalle de temps.

**6.** Procédé suivant la revendication 5, **caractérisé en ce que**, pour la détermination de la valeur de la qualité de l'énergie, on tient compte de toutes les parties de l'installation données à l'avance et de toutes les règles de la qualité de l'énergie données à l'avance.

**7.** Procédé suivant la revendication 6, **caractérisé en ce que**, pour la détermination de la valeur de la qualité de l'énergie, on tient compte exclusivement des parties de l'installation et des règles de la qualité de l'énergie, qui sont concernées par une contravention à une règle dans l'intervalle de temps choisi de la part de l'utilisateur.

**8.** Procédé suivant la revendication 7, **caractérisé en ce que**, pour la détermination de la valeur de la qualité de l'énergie, on tient compte de toutes les parties de l'installation et de toutes les règles de la qualité de l'énergie choisies, si l'on n'a pas constaté de contravention à une règle dans l'intervalle de temps.

**9.** Procédé suivant l'une des revendication 5 à 8, **caractérisé en ce que**, dans le cas d'un choix de la part de l'utilisateur d'une ou de plusieurs règles de la qualité de l'énergie pour la détermination et l'affichage de la valeur de la qualité de l'énergie dans le domaine d'affichage rapporté à un temps, on tient compte exclusivement des règles de la qualité de l'énergie et des parties de l'installation choisies, qui, dans l'intervalle de temps et en ce qui concerne les règles de la qualité de l'énergie choisies, sont concernées par une contravention à une règle.

**10.** Procédé suivant l'une des revendications 5 à 9, **caractérisé en ce que** dans le cas d'un choix de la part de l'utilisateur d'une ou de plusieurs parties de l'installation pour la détermination et l'affichage de la valeur de la qualité de l'énergie dans le domaine d'affichage rapporté à un temps, on tient compte exclusivement des parties de l'installation et des règles de la qualité de l'énergie choisies, qui sont concernées par une contravention aux règles dans l'intervalle de temps et dans les parties de l'installation sélectionnées.

**11.** Procédé suivant l'une des revendications précédentes, **caractérisé en ce que** le repérage optique s'effectue sous une forme de type à lampe par des symboles de lampe rouge ou verte.

FIG 1

EP 2 250 538 B1

# FIG 2

EP 2 250 538 B1

FIG 3

FIG 4

EP 2 250 538 B1

FIG 5

EP 2 250 538 B1

FIG 6

FIG 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20050038825 A1